# EUROPÄISCHE PATENTANMELDUNG

(11) **EP 4 257 271 A1**
(43) Veröffentlichungstag der Anmeldung: **11.10.2023**
(21) Anmeldenummer: 23158265.1
(22) Anmeldetag: 23.02.2023
(51) Int. Cl.: B23B 29/03, B23B 51/00, B23D 77/00

(54) **SPANABHEBENDES WERKZEUG MIT EINSTELLBARER FÜHRUNGSLEISTE**

(30) Priorität: 05.04.2022 DE 102022108098
(71) Anmelder: Gühring KG, 72458 Albstadt (DE)
(72) Erfinder: Matheis, Klaus, 88605 Sauldorf/Rast (DE)
(74) Vertreter: Winter, Brandl - Partnerschaft mbB

(57) **Zusammenfassung**

Beschrieben wird ein spanabhebendes Werkzeug (30) zur Herstellung bzw. Bearbeitung von Bohrungen mit hoher Positions- und/oder Oberflächengüte, mit einer Werkzeugachse (A) und einem Werkzeugträgerabschnitt (36), der zumindest eine Werkzeugschneide (44) und zumindest eine den Werkzeugträgerabschnitt radial an einer Bohrungswand abstützende Führungsleiste (46) trägt. Die Führungsleiste ist mittels einer an einem Führungsleistenträger (56) angreifenden Stelleinrichtung hinsichtlich ihrer radialen Position und hinsichtlich ihrer Neigung bezüglich der Werkzeugachse (A) einstellbar. Um mit geringem Aufwand ein hochpräzise arbeitendes Werkzeug mit zumindest einer Führungsleiste zusammenzustellen, die schnell und genau in eine optimale Position gebracht und bei Verschleiß exakt nachjustiert werden kann, ist der Führungsleistenträger (56) über ein Materialgelenk (GM) an einen werkzeugfesten Abschnitt, also entweder an den Werkzeugträgerabschnitt (36) oder eine damit fest verbindbare Komponente, wie z.B. einen Kassettenabschnitt (58) angebunden, und das Materialgelenk ist mittels der Stelleinrichtung (72, 74, 76) blockierbar.

## Beschreibung

Die Erfindung betrifft ein spanabhebendes Werkzeug zur Herstellung bzw. Bearbeitung von Bohrungen mittels Bohrmaschinen, Drehmaschinen, Bearbeitungszentren und anderen Werkzeugmaschinen, insbesondere zur Bearbeitung von Bohrungen mit einem großen Tiefen/Durchmesserverhältnis bzw. mit besonders hoher Fertigungsgüte oder -genauigkeit, gemäß dem Oberbegriff des Patentanspruchs 1.

Derartige Werkzeuge weisen beispielsweise mehrere geometrisch definierte Schneiden auf, die in Umfangsrichtung des Zerspanungswerkzeugs gesehen, oftmals in ungleicher Teilung in der Umfangsfläche des Werkzeugs vorgesehen sind. Sie sind außerdem mit mindestens einer Führungsleiste versehen.

Führungsleisten werden häufig mit dem Trägerkörper verlötet. Im Dokument DE 19831920 A1 ist ein Bohrwerkzeug beschrieben, bei dem in Drehrichtung gesehen eine der Messerplatte nacheilende Führungsleiste vorgesehen ist, die gemeinsam mit der Messerplatte an einem Schieber befestigt, beispielsweise in einer Nut eingelötet ist. Diese Anordnung hat den Nachteil, dass ein Wechseln und/oder eine Nachjustierung der Führungsleiste schwierig ist.

Gemäß DE 10 2017 107 249 A1 wird eine Führungsleiste 9 mittels einer Schraube in einer Ausnehmung gehalten. Sie kann, wenn sie verschlissen ist, durch eine neue ersetzt werden. Eine solche Führungsleiste ist vorrangig für Werkzeuge sinnvoll, deren Länge das ca. 8- bis 12-fache des Werkzeugdurchmessers überschreitet. Sie kann aber auch bei kürzeren Werkzeugen zum Einsatz kommen, wenn besonders hohe Anforderungen an die Geradheit der Bohrung gestellt werden.

Es sind allerdings auch radial beweglich geführte Führungsleisten vielfach bekannt.

Aus dem Dokument DE 25 41 423 A1 ist ein mit einem langen Schaft ausgestattetes Tiefbohrwerkzeug mit einem Führungsstück bekannt, das biegegelenkig mit dem Schaft verbunden ist und am Umfang mindestens ein radial federnd geführtes Führungselement zur Anlage an der Bohrungswand trägt. Auch bei einer Reibahle gemäß WO 2010/096005 A1 sind Führungspads vorhanden, die sich über elastisch nachgiebige Ringe an einem Nutgrund abstützen, wobei ihre radial äußere Anschlagstellung von einer Fixierschraube bestimmt wird.

US 3,389,621 A1 beschreibt ein Tiefloch-Bohrwerkzeug mit einer Führungsleiste, die mittels eines Kühl-/Schmiermitteldrucks gegen die Kraft einer Rückholfeder radial nach außen in Anlagekontakt mit der Bohrungswandung gedrückt werden kann.

WO 2015/165706 A1 zeigt eine Ausgestaltung, bei der zwei feststehende und zumindest eine radial elastisch nachgiebige Führungsleisten verwendet werden, wobei das Zerspanungswerkzeug durch die Federkraft der federnd gelagerten Führungsleiste bei der Bearbeitung und/oder Herstellung einer Bohrung gegen die beiden feststehenden Führungsleisten elastisch angepresst wird.

Aus dem Dokument DE 2416157 C2 ist ein Bohrwerkzeug mit einer Führungsleiste bekannt, die in einer Axialnut des Werkzeugkörpers in einem elastisch nachgiebigen Dämpfungsmaterial gelagert ist. Auch bei dem Werkzeug gemäß WO 00/76702 A1 sind Führungsleisten radial elastisch abgestützt.

Es sind auch Werkzeuge zur Herstellung bzw. Bearbeitung von Bohrungen bekannt, bei denen die Führungsleisten radial einstellbar sind.

Das Dokument WO 2005/009657 A2 beschreibt beispielsweise einen Bohrkopf mit wenigstens einem an seinem Umfang angeordneten Führungselement und mit wenigstens einem an dem Umfang angeordneten Schneideinsatz. Sowohl die Führungselemente als auch der wenigstens eine Schneideinsatz werden von Kassetten getragen, welche in Nuten verschieblich geführt sind. Zur gemeinsamen Einstellung und Justierung des radialen Überstandes sowohl des wenigstens einen Führungselements als auch des wenigstens einen Schneideinsatzes über den Umfang des Bohrkopfgehäuses ist ein Einstellmittel vorgesehen, das an den Kassetten anliegt und dessen Form in Umfangsrichtung so auf den radialen Abstand der Kassetten von der Symmetrieachse des Bohrkopfes angepasst ist, dass gleichzeitig mit der Befestigung des Einstellmittels an dem Bohrkopf die Einstellung und Justierung des Überstandes der Führungselemente und des wenigstens einen Schneideinsatzes erfolgt.

Gattungsbildende Werkzeuge sind beispielsweise aus den Dokumenten DE 2 057 512 A1, DE 43 22 409 C2, EP 2 331 280 B1 oder EP 2 560 778 B1 bekannt.

DE 2 057 512 A1 zeigt ein Bohrwerkzeug mit Führungsleiste, die auf einem schwenkbar gelagerten Tragkörper angeordnet ist, so dass sie sich verschwenken und sich der Oberfläche des Bohrloches anpassen kann, wodurch ein voller Oberflächenkontakt gesichert ist.

Aus der DE 43 22 409 C2 ist eine Vorrichtung zur zerspanenden Bearbeitung einer zu einer geometrischen Längsachse koaxialen Außenseite 55 eines Werkstücks bekannt, bei der ein Schneidkopf axial über die Außenseite des Werkstücks stülpbar ist. Am Schneidkopf ist eine Messerplatte anbringbar, deren Schneidkante sich in einem ersten vorgebbaren Radialabstand parallel zur geometrischen Längsachse erstreckt. Am Schneidkopf ist zumindest eine Führungsfläche angeordnet, die an einen Teilbereich der Außenseite des Werkstücks gleitend anlegbar ist. Die Führungsfläche ist dabei an einer Führungsleiste ausgebildet ist, die lösbar am Schneidkopf (11) anbringbar und in radialer Richtung bezüglich der geometrischen Längsachse (13) einstellbar am Schneidkopf gelagert ist.

EP 2 331 280 B1 beschreibt ein materialabtragendes Werkzeug mit einem Gehäusekörper, der eine Sitzfläche für einen Schneideinsatz und eine Führungsleiste aufweist, die in radialer Richtung zwischen einer ersten radialen Position und einer zweiten radialen Position einstellbar ist, indem auf die Führungsleiste ein Differenzdruck aufgebracht wird.

Im Dokument EP 2 560 778 B1 schließlich wird ein Bohrkopf für ein Tiefbohrwerkzeug beschrieben, das eine Schneidenecke und eine erste Führungsleiste um einen in Umfangsrichtung des Bohrkopfes gemessenen Führungsleistenwinkel versetzt zur Schneidenecke und eine zweite Führungsleiste diametral gegenüberliegend von der Schneidenecke aufweist. Mindestens einer der Führungsleisten ist eine Einstelleinrichtung zur gegebenenfalls stufenlosen Einstellung eines radialen Abstandes zwischen ihrer äußeren Anlagezone und der Drehachse zugeordnet.

An Werkzeuge der vorstehend beschriebenen Art werden immer höhere Anforderungen hinsichtlich Fertigungsgenauigkeit, Standzeit und Wirtschaftlichkeit gestellt. So ist es mit bekannten Werkzeugen zwar grundsätzlich möglich, die Führungsleisten einzustellen. Aber der Einstellvorgang ist oftmals zu zeitraubend. Hinzu kommt, dass auch die Führungsleisten einem Verschleiß unterliegen, so dass das Werkzeug zum Nachstellen der Führungsleisten für eine nicht unerhebliche Zeitspanne aus der Produktion genommen werden muss. Schließlich zeigt sich bei bekannten Werkzeugen, dass die Feineinstellung der Führungsleisten umso ungenauer wird, je stabiler die Befestigung der Führungsleisten ausgestaltet wird.

Es ist demnach Aufgabe der Erfindung, ein gattungsgemäßes Werkzeug bereitzustellen, bei dem die Führungsleiste bei stabiler Fixierung am Werkzeugträgerabschnitt schneller und genauer in eine optimale Position gebracht und bei Verschleiß exakt nachjustiert werden kann. Eine weitere Aufgabe ist darin zu sehen, eine Kassette für ein solches Werkzeug bereitzustellen, mit der es gelingt, mit möglichst geringem Aufwand ein hochpräzise arbeitendes Werkzeug mit zumindest einer Führungsleiste zusammenzustellen, die schnell und genau in eine optimale Position gebracht und bei Verschleiß exakt nachjustiert werden kann.

Die Aufgabe wird durch ein spanabhebendes Werkzeug mit den Merkmalen des Patentanspruchs 1 bzw. durch eine Kassette mit den Merkmalen des Patentanspruchs 14 gelöst. Vorteilhafte Weiterbildungen sind Gegenstand der Unteransprüche.

Die Besonderheit des Werkzeugs ist in der Art und Weise zu sehen, wie die Führungsleiste hinsichtlich ihrer Lage und Ausrichtung zur Werkzeugachse bzw. zu einer Bezugsfläche einer die Führungsleiste tragenden Kassette einstellbar ist. Dabei sitzt die Führungsleiste fest auf einem Führungsleistenträger, welcher über ein Materialgelenk an einen werkzeugfesten Abschnitt angebunden ist. Der Führungsleistenträger ist dabei regelmäßig steifer ausgebildet als das Materialgelenk, so dass der Führungsleistenträger bei elastischer Verformung des Materialgelenks keiner namhaften Verformung unterliegt. Weil das Materialgelenk mittels der Stelleinrichtung blockierbar ist, erfüllt die Stelleinrichtung eine Doppelfunktion. Sie sorgt für eine spielfreie Einstellbarkeit im Mikrometerbereich und stabilisiert gleichzeitig die gelenkige Anbindung des Führungsleistenträgers, so dass die Führungsleiste die auf sie einwirkenden Stützkräfte über den Führungsleistenträger und im Zusammenwirken von Materialgelenk und Stelleinrichtung sicher in den Werkzeugkörper bzw. die Kassette einleiten kann. Gemäß dieser Anordnung ist der Führungsleistenträger quasi in einer Radialebene schwimmend am werkzeugfesten Abschnitt angelenkt, wird aber durch die Stelleinrichtung lagemäßig fixiert. Dabei ergibt sich der zusätzliche Vorteil, dass das die Einstellbarkeit der Führungsleiste erlaubende Gelenk keiner Verschmutzung unterliegt, so dass es über einen langen Zeitraum und auch unter extremen Einsatzbedingungen mit aggressiven Kühl-/Schmierstoffen zuverlässig arbeitet. Vorzugsweise ist die Anordnung dabei so getroffen, dass das Materialgelenk dem Führungsleistenträger einen einachsigen Haupt-Bewegungsfreiheitsgrad lässt, wodurch die Anbindung des Führungsleistenträgers an Stabilität gewinnt.

Gemäß einer vorteilhaften Weiterbildung weist die Stelleinrichtung zumindest ein in ihrer Länge veränder- bzw. einstellbares, stabartig ausgebildetes Stellglied auf. Das Stellglied wird dabei vorzugsweise so positioniert und ausgerichtet, dass es die auf die Führungsleiste einwirkenden Stützkräfte nach der Art eines Druckstabs in das Werkzeug bzw. in eine am Werkzeug fixierte Kassette einleiten kann, so dass das Materialgelenk von diesen Kräften weitgehend entlastet wird. Weil das Stellglied in Verbindung mit dem Materialgelenk den Führungsleistenträger schub- und zugfest am Werkzeugträgerabschnitt fixiert, muss zur Nachstellung bzw. Verstellung der Führungsleiste kein Befestigungsmittel gelöst werden, wodurch die Ein- bzw. Nachstellbewegung genauer und schneller ausgeführt werden kann. Weil der Führungsleistenträger zur Ein- bzw. Nachstellung der Führungsleiste lediglich in einer Radialebene beweglich sein muss, braucht das zumindest eine Stellglied lediglich die radialen Stützkräfte aufzufangen. Kräfte in Umfangsrichtung können durch eine flächige Abstützung des Führungsleistenträgers an einem werkzeugfesten Bauelement abgefangen werden.

Wenn die Stelleinrichtung zwischen dem Führungsleistenträger und einer bezüglich des Werkzeugträgerabschnitts räumlich fixierten bzw. fixierbaren Komponente des Werkzeugs geschaltet ist, ergibt sich eine besonders widerstandskräftige, d.h. verformungssteife Blockierung des Materialgelenks.

Vorteilhafterweise ist das Materialgelenk derart gestaltet, dass es eine im Wesentlichen radiale Verschiebebewegung und eine Verschwenkbewegung des Führungsleistenträgers gegenüber dem Werkzeugträgerabschnitt um eine Achse erlaubt, welche auf einer die Führungsleiste und die Werkzeugachse enthaltenden Radialebene im Wesentlichen senkrecht steht. Diese Ausgestaltung ermöglicht es, den Gelenk-Freiheitsgrad nicht nur zur radialen Verstellung der Führungsleiste, sondern auch zur Einstellung der Neigung bezüglich der Werkzeugachse zu nutzen. Auf diese Weise kann die Führungsleiste auf einfachste Weise einer Feinst-Nachstellung unterzogen werden, falls sich über die Länge der Führungsleiste ein ungleichmäßiger Verschleiß zeigen sollte. Gleichzeitig wird dem Materialgelenk eine gerichtete Beweglichkeit gegeben. Folglich können die von der Stelleinrichtung zu übertragenden Kräfte für die Sperrung bzw. Blockierung des Materialgelenks ebenfalls auf eine Ebene beschränkt werden.

Wenn zur Blockierung des Materialgelenks zumindest zwei Stellglieder vorgesehen sind, die auf verschiedenen Seiten der Gelenkachse liegen, können die Stellglieder dazu herangezogen werden, die Blockierung des Materialgelenks zu verspannen, d.h. zusätzlich und spielfrei zu stabilisieren. Das Materialgelenk erlaubt in diesem Fall dem Führungsleistenträger eine Kippbewegung um die Materialgelenkachse ähnlich einer Wippe, wodurch es auch gelingt, die Neigung des Führungsleistenträgers zur Werkzeugachse spielfrei ein- und nachzustellen.

Vorteilhafterweise weist das zumindest eine Stellglied eine vorzugsweise radial oder stirnseitig zugängliche Stellschraube auf, die sich einerseits am werkzeugfesten Abschnitt abstützt und andererseits mit dem Führungsleistenträger in Gewindeeingriff steht. Ein solches Stellglied ist einfach aufgebaut und es erlaubt bei entsprechender Auswahl der Gewindesteigung die Bereitstellung einer ausreichend kleinen Übersetzung zwischen der Stell-Drehbewegung der Stellschraube und der dadurch induzierten Verschiebebewegung des Führungsleistenträgers, so dass selbst mit im Durchmesser kleinen Stellschrauben eine Feineinstellung der Führungsleiste im Mikrometer- bzw. Winkelsekundenbereich ermöglicht ist. Gleichzeitig schafft diese Weiterbildung die Voraussetzung dafür, dass eine genaue Zuordnung zwischen der Antriebsbewegung der Stellschraube und dem dadurch hervorgerufenen Verstellweg der Führungsleiste festgelegt ist. Folglich kann für eine bestimmte Drehbewegung der Stellschraube, von beispielsweise 90°, eine genau festgelegte radiale Verschiebung des Führungsleistenträgers im Mikrometerbereich bereitgestellt werden, beispielsweise von 5 µm.

Wenn die Stellschraube von einer Differentialgewindeschraube gebildet ist, die zwei Gewindeabschnitte unterschiedlicher Steigung und/oder unterschiedlichen Gewindesinns hat, von denen ein erster Gewindeabschnitt in den Führungsleistenträger und ein zweiter Gewindeabschnitt in eine vorzugsweise von außen einsetzbare Mutter eingreift, die in einer schlitzartigen Ausnehmung feststellbar gefangen ist, kann auf das Getriebe-Übersetzungsverhältnis zwischen Drehbewegung der Stellschraube und Verschiebebewegung der Führungsleiste mit einfachen Mitteln Einfluss genommen werden.

Grundsätzlich ist es möglich, den Führungsleistenträger über das Materialgelenk direkt an einen Werkzeugkörper bzw. an den Werkzeugträgerabschnitt anzubinden, d.h. das Materialgelenk einstückig mit dem Werkzeugträgerabschnitt und dem Führungsleistenträger auszubilden. Dies setzt allerdings in der Regel einen komplexen Aufbau des Werkzeugträgerabschnitts voraus, der aber beispielsweise durch eine Herstellung des Werkzeugkörpers im 3-D-Druck ohne Weiteres und inzwischen auch wirtschaftlich bereitgestellt werden kann. Eine verbesserte Flexibilität hinsichtlich der Gestaltung des Materialgelenks ergibt sich allerdings dann, wenn die den Führungsleistenträger über das Materialgelenk tragende Komponente von einer vorzugsweise quaderförmig ausgebildeten Kassette gebildet ist. Dabei ergibt sich der weitere Vorteil, dass ein die Kassette aufnehmender Sitz im Werkzeugträgerabschnitt dazu herangezogen werden kann, dem Materialgelenk eine gerichtete Beweglichkeit zu geben.

Wenn die Kassette in einer Tasche, beispielsweise in einer schlitzartigen Ausnehmung, des Werkzeugträgerabschnitts aufgenommen und mittels einer die Kassette durchdringenden Spannschraube in dieser fixierbar ist, indem sie unter flächiger Abstützung auf einer im Wesentlichen radialen Stützfläche gegen eine dazu im Winkel verlaufende Stützflächenanordnung drückbar ist, erhält der Führungsleistenträger in der Tasche bzw. in der schlitzartigen Ausnehmung eine flächige Abstützung in Umfangsrichtung und eine Führung in radialer Richtung. Damit können die auf das Materialgelenk im Einsatz des Werkzeugs einwirkenden Kräfte weiter begrenzt werden, wodurch mehr Gestaltungsfreiheit für das Materialgelenk entsteht.

Gleichzeitig kann eine geeignete radiale Abstützung der Kassette dazu genutzt werden, die Bandbreite der Nachstellbewegung der Führungsleiste zu erweitern, nämlich vorzugsweise dadurch, dass die Kassette radial verstellbar am Werkzeugträgerabschnitt gehalten ist.

Schneidwerkzeuge werden häufig von Kassetten getragen, die in eine Tasche des Werkzeugträgerabschnitts fixiert werden. Dabei werden die Kassetten mit Schneidstoffplatten bestückt. Auch derartige Kassetten können mit einem vorstehend beschriebenen Materialgelenk ausgestattet werden, das sich hinter der Schneide befindet und über das der Führungsleistenträger an die Kassette angebunden ist. Auf diese Weise kann die Führungsleiste in verhältnismäßig kleinem Umfangsabstand zur Schneide des Werkzeugs positioniert werden, wobei gleichzeitig Bauteile eingespart werden.

Um das Verformungsverhalten des Materialgelenks so exakt wie möglich festzulegen bzw. zu steuern, wird eine genau gefertigte dreidimensionale Materialbrücke zwischen dem Führungsleistenträger und dem werkzeugfesten Abschnitt verlangt. Diese Herstellung kann beispielsweise durch eine materialabtragende Bearbeitung, wie z.B. durch ein Erodierverfahren, erfolgen.

Eine besonders große Flexibilität hinsichtlich der Ausgestaltung des Materialgelenks ist dann gegeben, wenn das Materialgelenk im 3-D-Druckverfahren, wie z.B. in einem SLS-Verfahren, hergestellt wird.

Das vorstehend beschriebene Materialgelenk kann grundsätzlich Bestandteil eines Werkzeugs bzw. eines Werkzeugträgerabschnitts sein. Zusätzliche herstellungstechnische Vorteile ergeben sich allerdings dann, wenn das Materialgelenk Bestandteil einer auswechselbaren Kassette, vorzugsweise in der Ausgestaltung als im Wesentlichen prismen- bzw. quaderförmiger Körper gemäß Anspruch 14 ist, der zur Fixierung am Werkzeug mit drei seiner Außenflächen mittels einer Spannschraube gegen Anschläge des Werkzeugs drückbar ist und auf einer radial außenliegenden Seitenfläche eine Führungsleiste trägt. In diesem Fall ist ein die Führungsleiste tragender Abschnitt der Kassette über das Materialgelenk an einen kassettenfesten Abschnitt angebunden, und das Materialgelenk ist mittels der vorstehend abgehandelten Stelleinrichtung blockierbar. Die vorstehend beschriebenen Vorteile hinsichtlich der Ein- und Nachstellung der Führungsleiste treffen auch für diese Gestaltung zu, so dass darauf hier nicht näher eingegangen werden muss.

Vorteilhafte Ausgestaltungen der Kassette sind Gegenstand der Ansprüche 15 bis 22.

Um die Ein- und Verstellung der Führungsleiste in einem möglichst breiten Spektrum zu ermöglichen, ist es von Vorteil, wenn man wie folgt vorgeht: zunächst wird der über das Materialgelenk an die bezüglich des Werkzeugträgerabschnitts räumlich fixierte bzw. fixierbare Komponente des Werkzeugs angebundene Führungsleistenträger mittels des zumindest einen Stellglieds in eine Position gebracht, in der unter geringer elastischer Verformung des Materialgelenks die radial äußere Stützfläche der Führungsleiste parallel zur Werkzeugachse ausgerichtet ist und mit dem radial äußersten Flugkreis der Werkzeugschneide im Wesentlichen fluchtet. In dieser Position wird dann die Führungsleiste auf Maß geschliffen. Somit kann die Führungsleiste aus dieser Position heraus sowohl radial nach innen als auch nach außen im Mikrometerbereich verstellt werden, und zwar zu beiden Seiten des Materialgelenks entweder gleich- oder gegensinnig, wodurch auch eine Neigungsanpassung im Winkelminutenbereich möglich ist.

Nachstehend werden vorteilhafte Ausgestaltungen der Erfindung näher erläutert.

### Kurzbeschreibung der Figuren

Figuren 1 und 2 sind perspektivische Ansichten einer ersten Ausführungsform des Werkzeugs, wobei Fig. 2 eine der Fig. 1 entsprechende Ansicht in transparenter Darstellung ist;
Figuren 3 bis 5 sind Darstellungen (perspektivisch, Draufsicht und Schnittdarstellung) einer bei der ersten Ausführungsform des Werkzeugs verwendeten, eine Führungsleiste tragenden Kassette;
Figuren 6 bis 8 sind Darstellungen (perspektivisch, Draufsicht und Schnittdarstellung) einer Variante der Kassette;
Figuren 9 bis 11 sind Darstellungen (perspektivisch mit zwei Schnittdarstellungen) einer Variante der Kassette;
Figuren 12 bis 14 sind Darstellungen (perspektivisch, Draufsicht und Schnittdarstellung) einer Variante der Kassette mit Schneidplatte;
Figuren 15 bis 22 sind Darstellungen (perspektivisch, perspektivisch transparent, Seiten- und Rückansicht und vier Schnittdarstellungen) einer weiteren Variante der Kassette mit Schneidplatte;
Figuren 23 bis 25 sind Darstellungen (perspektivisch und zwei Schnittdarstellungen) einer weiteren Variante der Kassette;
Figuren 26 und 27 sind Darstellungen (perspektivisch und Schnittdarstellung) einer Variante der Kassette;
Figuren 28A bis 28G Darstellungen der Sequenz von Produktions- und Einstellvorgängen einer die Führungsleiste tragenden Kassette; und
Figur 29 eine perspektivische Ansicht einer abgewandelten Ausgestaltung einer Führungsleistenverstellung.

Nachstehend werden bevorzugte Ausführungsformen der vorliegenden Erfindung auf der Basis der zugehörigen Figuren beschrieben. Funktional vergleichbare Elemente werden dabei mit ähnlichen Bezugszeichen versehen, denen eine andere Ordnungsziffer vorangestellt ist.

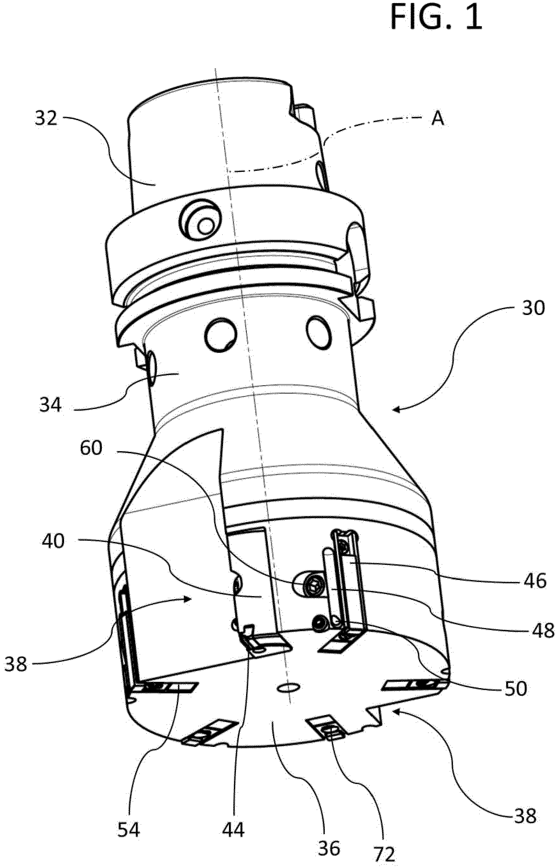

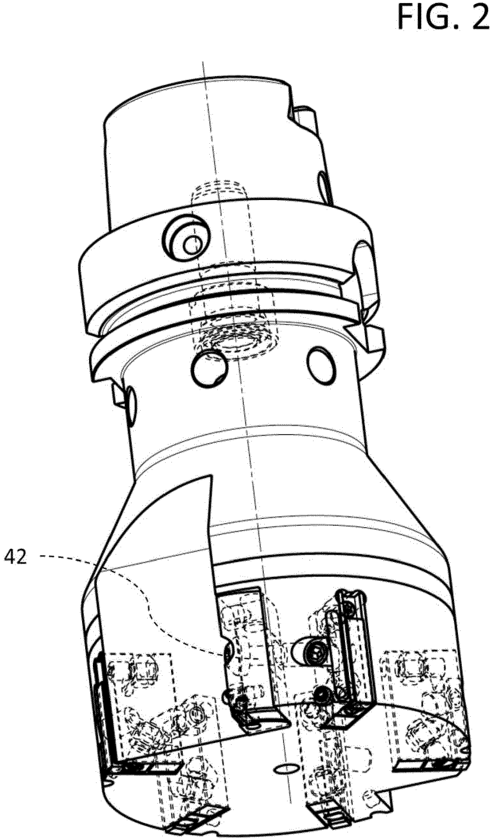

Fign. 1 und 2 zeigen perspektivische Ansichten einer Ausführungsform eines erfindungsgemäßen spanabhebenden Werkzeugs 30. Das Werkzeug ist drehantreibbar und hat eine Werkzeugachse A. Es dient in diesem Beispiel dazu, eine verhältnismäßig große Bohrung in der Größenordnung von 80 mm mit besonderer Oberflächengüte und Präzision, beispielsweise mit einer Durchmessertoleranz im Mikrometerbereich herzustellen. Hierzu hat es zum Anschluss an eine Werkzeugmaschinenspindel einen HSK-Spannschaft 32, an den sich über einen relativ kurzen Schaftabschnitt 34 ein Werkzeugkopf 36 anschließt, der nachfolgend als Werkzeugträgerabschnitt bezeichnet wird und der über den Umfang verteilt mehrere - im gezeigten Fall zwei - Taschen 38 zur Aufnahme einer im Wesentlichen quader- bzw. prismenförmigen Schneidenträgerkassette 40, die als sogenannter Kurzklemmhalter ausgebildet ist, aufweist. Im gezeigten Ausführungsbeispiel ist lediglich ein Kurzklemmhalter 40 vorgesehen, der - wie aus Figur 2 erkennbar - mittels einer Spannschraube 42 in der Tasche 42 fixiert ist. Die Tasche 38 dient gleichzeitig als Spanraum. Vorzugsweise ist der Kurzklemmhalter 40 mittels einer nicht näher dargestellten Stelleinrichtung radial und/oder axial und/oder hinsichtlich seiner Neigung zur Werkzeugachse A einstellbar. Die Schneidenträgerkassette 40 trägt stirnseitig einen Schneideinsatz 44 mit einer stirnseitigen und einer umfangsseitigen Schneidkante, so dass das Werkzeug stirnschneidend ist.

Um das Werkzeug in der auszubildenden bzw. zu bearbeitenden Bohrung so exakt wie möglich zu führen und dadurch die angestrebte Maßgenauigkeit und Oberflächengüte sicherzustellen, hat das es mehrere - im gezeigten Fall fünf -, über den Umfang vorzugsweise ungleichmäßig verteilte Führungsleisten 46, die parallel zur Werkzeugachse A ausgerichtet sind und sich vorzugsweise axial bis zur Position der stirnseitigen Schneidkante des Schneideinsatzes 42 erstrecken. Die Führungsleisten 46, die vorzugsweise aus einem Hartstoff, wie z.B. Vollhartmetall (VHM) bestehen, sind außenseitig auf Präzision geschliffen, so dass sich ihre Außenoberfläche auf die Zerspanungskräfte abgestimmt auf der Bohrungswandung möglichst gleichmäßig abstützt und damit den Werkzeugträgerabschnitt 36 in der Bohrung zentriert. Zu diesem Zweck sind die Führungsleisten 46 hinsichtlich ihrer radialen Position und hinsichtlich ihrer Neigung bezüglich der Werkzeugachse A ein- bzw. nachstellbar, und zwar vorzugsweise im Mikrometerbereich bzw. im Winkelminutenbereich, was nachfolgend unter Bezug auf weitere Figuren näher beschrieben werden soll. Vorzugsweise sind die Führungsleisten 46 auch in ein Kühl-/Schmiermittel (KSM)-Versorgungssystem einbezogen, zu dem eine in Figur 1 erkennbare Nut 48 und eine KSM-Austrittsöffnung 50 gehört.

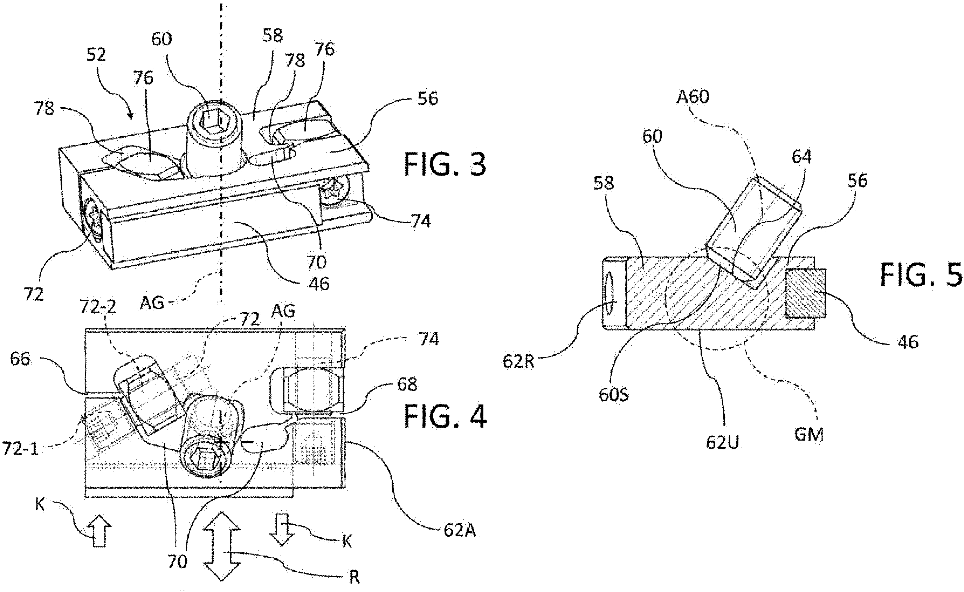

Die Führungsleisten 46 sitzen ihrerseits auf Kassetten 52 (siehe Figuren 3 bis 5), die in quaderförmiger Ausgestaltung weitgehend formschlüssig in schlitzförmigen Ausnehmungen 54 des Werkzeugträgerabschnitts 36 aufgenommen und dort verankert sind. Die Abmessungen einer solchen Kassette 52 liegen beispielsweise bei einer Länge von 25 bis 35 mm, einer Tiefe von 12 bis 20 mm und einer Dicke von 4 bis 8 mm. Zur Einstellung der Führungsleisten 46 dient eine nachfolgend anhand der Figuren 3 bis 5 näher zu beschreibende Stelleinrichtung.

Die Kassette hat einen die Führungsleiste 46 ortsfest beispielsweise durch eine Löt- oder Klebeverbindung tragenden, Führungsleistenträger 56, der über ein Materialgelenk GM, d.h. über eine in der Schnittdarstellung gemäß Figur 5 gezeigte und mit gestrichelten Linien bezeichnete Materialbrücke, an einen Kassettenabschnitt 58 angebunden ist, der mittels einer in den Werkzeugträgerabschnitt 36 geschraubten Klemmschraube 60 lage- und verschiebesicher in der schlitzartigen Ausnehmung 54 gehalten ist, so dass dieser Kassettenabschnitt 58 einen werkzeugfesten Abschnitt ausbildet. Die Klemmschraube 60 ist so orientiert und durchdringt den Werkzeugträgerabschnitt 36 so, dass sie die Kassette 52, d.h. den den Führungsleistenträger 56 tragenden Kassettenabschnitt 58, mit drei Seitenflächen 62R, 62A und 62U gegen eine Stützflächenanordnung, im gezeigten Beispiel gegen drei im Winkel, beispielsweise im rechten Winkel, zueinander stehende Stützflächen der schlitzförmigen Ausnehmung 54 drückt. Dabei stützt sich die Klemmschraube 60 - wie aus Figur 5 hervorgeht - mit einer Stirnseite 60S flächig auf einer Druckfläche 64 des Kassettenabschnitts 58 ab. Figur 5 zeigt dabei den Schnitt senkrecht zu dieser Druckfläche 64 entlang der Achse A60 der Klemmschraube 60. Über die Seitenfläche 62R erfolgt die radiale Abstützung, über die Seitenfläche 62A die axiale Abstützung und über die Seitenfläche 62U erfolgt die Abstützung in Umfangsrichtung.

Das Materialgelenk GM entsteht dadurch, dass Material der Kassette 52 zu beiden Seiten der Materialbrücke entfernt ist, was beispielsweise dadurch geschieht, dass ein vorbestimmtes, in Figur 3 und 4 erkennbares Ausnehmungsmuster beispielsweise im Fräse- und/oder Erodierverfahren in die Kassette 52 eingebracht ist. Damit entsteht eine Konfiguration, gemäß der der Führungsleistenträger 56 ähnlich einem im Wesentlichen mittig am Kassettenabschnitt 58 abgestützten Kippbalken ausgebildet und an diesem gehalten ist. Das Materialgelenk GM ist somit derart gestaltet, dass es unter elastischer Verformung der Materialbrücke eine im Wesentlichen radiale Verschiebebewegung und eine Verschwenkbewegung des im Vergleich zum Materialgelenk steifen Führungsleistenträgers 56 um eine Achse AG (siehe Fig. 3 und 4) erlaubt, welche auf einer die Führungsleiste 46 und die Werkzeugachse A enthaltenden Radialebene, also auf der Zeichenebene der Figur 4 im Wesentlichen senkrecht steht. Das Ausnehmungsmuster weist in der Ausführungsform der Figuren 3 bis 5 zu beiden Seiten des Materialgelenks GM einen axialen Schlitz 66, 68 auf, der sich in der Nähe des Materialgelenks GM jeweils zu einer Ausbuchtung 70 erweitert.

Wie in Figur 3 und 4 dargestellt, greift am Führungsleistenträger 56 eine Stelleinrichtung an, mit der die Lage und Ausrichtung des Führungsleistenträgers 56 veränderbar und das Materialgelenk GM blockierbar ist. Hierzu weist die Stelleinrichtung zwei längenverstellbare, stabartig ausgebildete Stellglieder 72, 74 auf, die zwischen den Führungsleistenträger 56 und den Kassettenabschnitt 58, d.h. einer bezüglich des Werkzeugträgerabschnitts 36 räumlich fixierten bzw. fixierbaren Komponente des Werkzeugs 30 geschaltet ist.

Wie in Figur 3 und 4 gezeigt, liegen die beiden identisch ausgebildeten Stellglieder 72, 74 auf verschiedenen Seiten des Materialgelenks GM bzw. der Gelenkachse AG und sie sind von vorzugsweise radial oder stirnseitig zugänglichen Stellschrauben gebildet, die sich einerseits am Kassettenabschnitt 58 abstützen und andererseits mit dem Führungsleistenträger 56 in Gewindeeingriff stehen. Genauer gesagt sind die Stellschrauben 72, 74 jeweils von einer Differentialgewindeschraube gebildet, die zwei Gewindeabschnitte 72-1, 72-2 unterschiedlicher Steigung hat, von denen ein erster Gewindeabschnitt 72-1 mit dem Führungsleistenträger 56 und ein zweiter Gewindeabschnitt 72-2 mit einer vorzugsweise von außen einsetzbaren Mutter 76 in Gewindeeingriff steht, die in einer schlitzartigen Ausnehmung 78 der Kassette 52 axialfest gefangen ist.

Die Gewindeabschnitte 72-1, 72-2 haben unterschiedliche Durchmesser derart, dass der Gewindeabschnitt 72-2 kleineren Durchmessers mit Spiel durch das Gewinde im Führungsleistenträger 56 gesteckt werden kann, bevor er mit der Mutter 76 in Eingriff gelangt. Die Differentialgewindeschraube 72, 74 wird dann mit ihrem Gewindeabschnitt 72-1 größeren Durchmessers in das zugehörige Innengewinde im Führungsleistenträger 56 geschraubt, bis der Gewindeabschnitt 72-1 im Wesentlichen vollständig im Innengewinde des Führungsleistenträgers 56 aufgenommen ist. Damit bei dieser Einschraubbewegung gleichzeitig auch der Gewindeabschnitt 72-2 mit unterschiedlicher Gewindesteigung um ein im Wesentlichen gleiches Maß in die Mutter 76 eingeschraubt werden kann, ohne auf das Materialgelenk GM eine äußere Kraft aufzubringen, wird die Mutter 76 zur Kompensation des Gewindesteigungsunterschieds verdreht.

In der in den Figuren 3 und 4 gezeigten Montagesituation führt eine Antriebsbewegung der Differentialgewindeschraube 72, 74 dazu, dass der Führungsleistenträger 56 unter elastischer Verformung des Materialgelenk GM entweder zum Kassettenabschnitt 58 hin oder von diesem weg bewegt wird, so dass der Führungsleistenträger 56 und damit die Führungsleiste 46 wie mit dem Doppelpfeil R in Figur 4 angedeutet radial verlagert und/oder verkippt werden kann, was in Figur 3 mit dem Pfeilpaar K angedeutet ist. Während dieser Ein- bzw. Nachstellbewegung stützt sich der Führungsleistenträger 56 durchgehend und flächig über seine Seitenwand 62U an der Stützfläche in der schlitzartigen Ausnehmung 54 im Werkzeugträgerabschnitt 36 ab, wodurch das Materialgelenk einer auf eine Ebene beschränkte Biegeverformung unterliegt. Die hierdurch ermöglichte Verstellung bzw. Nachstellung der Führungsleiste 46 liegt im Mikrometer- bzw. im Winkelminutenbereich.

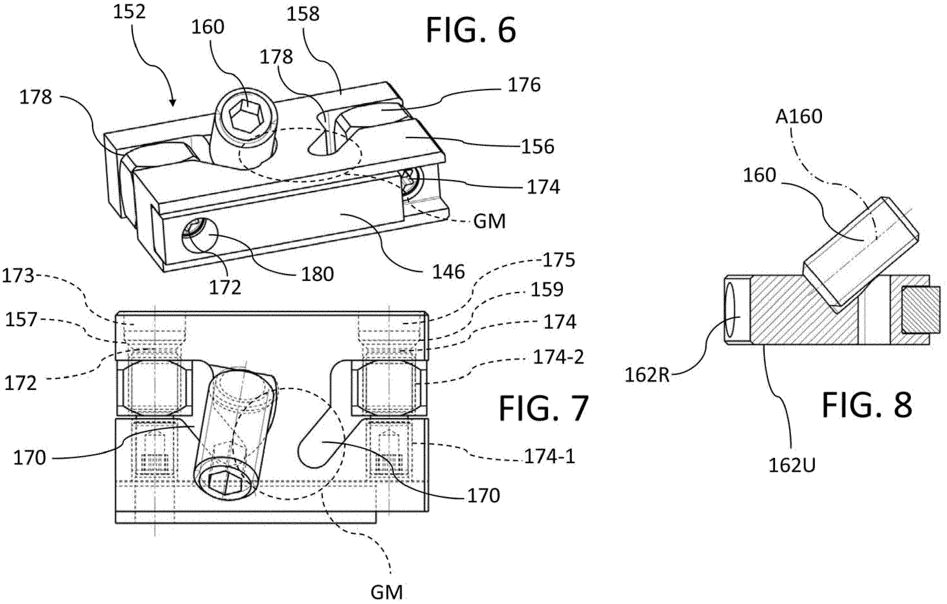

Eine Besonderheit der Ausführungsform gemäß Figur 1 bis 5 ist darin zu sehen, dass eine der Stellschrauben, d.h. sie Stellschraube 72, von der Stirnseite des Werkzeugs 30 betätigt werden kann. Die Variante der Kassette 152 gemäß Figur 6 bis 8 unterscheidet sich von dem vorstehend beschriebenen Ausführungsbeispiel bereits dadurch, dass beide Stellschrauben 172, 174 von radial außen, d.h. von Seiten der Führungsleiste 146 verstellbar sind. Die Verankerung der Kassette 152 am Werkzeugträgerabschnitt 36 des Werkzeugs erfolgt in der gleichen Weise wir bei dem Ausführungsbeispiel der Figuren 3 bis 5, so dass auf eine Beschreibung verzichtet werden kann.

Die in den Führungsleistenträger 156 eingelötete oder eingeklebte Führungsleiste 146 hat eine axiale Länge, die im Wesentlichen der axialen Länge der Führungsleiste 46 entspricht, so dass sich auch die Kassette 152 für die Bestückung eines stirnschneidenden Werkzeugs eignet. Allerdings muss die Führungsleiste 146 zusätzlich mit einem Durchbruch 180 für ein Einstellwerkzeug zur Betätigung der Stellschraube 172 ausgestattet sein. Das in den Figuren 6 und 7 mit gestrichelter Linie angedeutete Materialgelenk GM zwischen dem Führungsleistenträger 156 und dem Kassettenabschnitt 158 entsteht durch Freifräsungen 170, die sich an seitliche Taschen 178 zur axialfesten Aufnahme der Muttern 176 anschließen.

Die Stellschrauben 172, 174, die - ebenso wie beim Ausführungsbeispiel gemäß Figur 3 bis 5 - als identische Differentialgewindeschrauben ausgebildet sind, unterscheiden sich von den Stellschrauben 72, 74 der Figuren 3 bis 5 dadurch, dass sie von der anderen Seite der Kassette, also von der der Führungsleiste 146 abgewandten Seite eingesetzt bzw. eingefädelt werden. Somit steht ein Gewindeabschnitt 174-2 mit größerem Durchmesser mit der Mutter 176 in Gewindeeingriff, während ein Gewindeabschnitt 174-1 mit unterschiedlicher Gewindesteigung und kleinerem Durchmesser mit dem Führungsleistenträger 156 in Gewindeeingriff steht. Der Außendurchmesser des Gewindeabschnitts 174-1 ist hier kleiner als der Innendurchmesser des Gewindes in der Mutter 176. Beide Differentialgewindeschrauben 172, 174 haben jeweils einen im Durchmesser vergrößerten Schraubenkopf 173, 175, wodurch im Zusammenwirken mit einer Schulter 157, 159 der betreffenden Aufnahmebohrung im Kassettenabschnitt 158 ein Drehbewegungsanschlag für die Differentialgewindeschrauben 172, 174 gebildet wird. Auf diese Weise entsteht auch eine Anschlagposition für die radiale Verschiebung der Führungsleiste 146.

Auch bei diesem Ausführungsbeispiel liegt somit ein Aufbau vor, bei dem der Führungsleistenträger 156 über eine das Materialgelenk GM bildende Materialbrücke am restlichen Teil der Kassette 152, also am Kassettenabschnitt 158 angebunden ist. Das Materialgelenk GM ist dabei so gestaltet, dass es dem Führungsleistenträger 156 eine gerichtete elastisch schwimmende Beweglichkeit in einer Ebene gibt, die parallel zur Seitenfläche 162U verläuft.

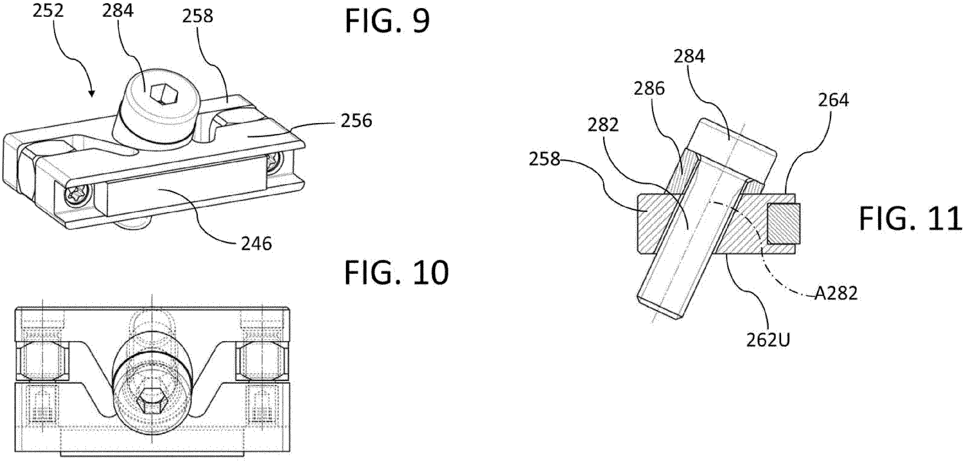

Eine weitere Ausführungsform einer eine einstellbare Führungsleiste 246 tragenden Kassette 252 ist in den Figuren 9 bis 11 dargestellt. Hinsichtlich der Ausbildung eines Materialgelenks GM zwischen dem Führungsleistenträger 256 und dem fest an einem Werkzeugträgerabschnitt 36 festlegbaren Kassettenabschnitt 258 und der Einstellmimik bestehen keine wesentlichen Unterschiede zum Ausführungsbeispiel gemäß Figur 6 bis 8, so dass eine Beschreibung hier entfallen kann.

Die Kassette 252 ist für den Einsatz an Werkzeugen geeignet, die nicht stirnschneidend sind. Unterschiedlich zur Ausgestaltung nach Figur 6 bis 8 ist die axiale Verkürzung der Führungsleiste 246 und die Art und Weise, wie die Kassette 252 in der schlitzartigen Ausnehmung des Werkzeugträgerabschnitts 36 fixiert wird. Hierzu kommt eine Spannschraube 282 zum Einsatz, die den Kassettenabschnitt 258 mit Spiel durchdringt und in den Werkzeugträgerabschnitt 36 geschraubt ist, wobei sich ein Schraubenkopf 284 flächig auf einer Distanzhülse 286 abstützt und letztere flächig gegen eine Seitenfläche 264 drückt, die der Seitenfläche 262U abgewandt ist. Die Distanzhülse 286 ist also entsprechend der Neigung der Achse A282 der Spannschraube 282 abgeschrägt.

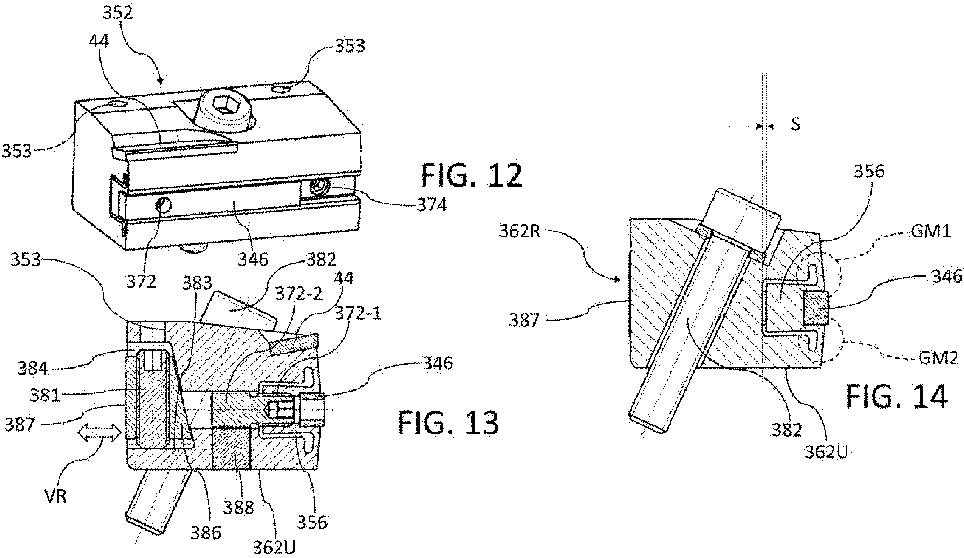

Im Folgenden wird unter Bezug auf die Figuren 12 bis 14 eine weiter abgewandelte Ausführungsform einer Kassette beschrieben, die als eine Schneidplatte 44 tragender Kurzklemmhalter 352 mit integrierter Führungsleiste 346 ausgebildet ist. Der im Wesentlichen quaderförmig ausgebildete Kurzklemmhalter 352 wird - wie in Figur 1 der Kurzklemmhalter 40 - mittels der Spannschraube 382 in einer Tasche des Werkzeugs festgespannt, so dass er mit seiner senkrecht zur Umfangsrichtung liegenden Außenfläche 362U mit einer Gegenanschlagfläche des Werkzeugträgerabschnitts 36 in Eingriff gelangt. Gleichzeitig wird die radial innenliegende Seite 362R gegen eine entsprechende Gegenanschlagfläche des Werkzeugträgerabschnitts 36 gedrückt.

Damit der Kurzklemmhalter 352 auch in radialer Richtung verstellbar wird, sind auf der der Führungsleiste 346 abgewandten Seite in entsprechend ausgeformten oder ausgefrästen Taschen 384 Abstützkörper 386 aufgenommen, die sich - wie am besten der Schnittansicht gemäß Figur 13 entnehmbar ist -über eine Keilflächenpaarung in den Taschen 384 radial abstützen und auf der der Führungsleiste 346 abgewandten Seite jeweils eine Stützfläche 387 ausbilden. Um die Stützflächen 387 - wie mit dem Doppelpfeil VR in Figur 13 angedeutet - in radialer Richtung einzustellen bzw. zu verstellen, ist eine in den Abstützkörper eingeschraubte Verstellschraube 381 vorgesehen, die sich axial an einer Bodenfläche 383 der Tasche 384 abstützt und über eine Profilausnehmung auf der entgegensetzten Seite mittels eines geeigneten Werkzeugs betätigbar ist. Für den Durchgriff eines solchen Werkzeugs sind im Kurzklemmhalter 352 ausreichend große Durchbrüche 353 vorgesehen. Man erkennt aus der Darstellung gemäß Figur 13, welche die Schnittansicht des Kurzklemmhalters 352 im Bereich des Durchbruchs 353 darstellt, dass durch eine Drehbewegung der Verstellschraube 381 der Abstützkörper 386 nach oben und nach unten bewegbar ist, wodurch sich die Stützfläche 387 und damit bei gelockerter Spannschraube 382 der Kurzklemmhalter 352 auf dem Werkzeugträgerabschnitt radial verschiebt. Dadurch kann nicht nur die radiale Position der Schneidkante der Schneidplatte, sondern auch deren Anstellung zur Werkzeugachse eingestellt werden.

Wie in den oben beschriebenen Ausführungsbeispielen ist der Kurzklemmhalter 352 mit einer einstellbaren Führungsleiste 346 ausgestattet, die auf einem Führungsleistenträger 356 sitzt. Der Führungsleistenträger 356 ist über ein Materialgelenk GM, genauer gesagt über die Materialbrücken GM1 und GM2 (siehe Figur 14 mit der Ansicht des Schnitts im Bereich der Spannschraube 382) an den Hauptkörper des Kurzklemmhalters 352 angebunden, so dass er unter elastischer Verformung der Materialbrücken GM1 und GM2 radial und hinsichtlich seiner Neigung zur Werkzeugachse A bzw. zur Stützfläche 387 einstellbar ist. Zwischen dem Führungsleistenträger 356 und dem Hauptkörper 358 des Kurzklemmhalters 352 verbleibt ein ausreichend breiter Spalt der Größe S (siehe Figur 14), der den maximalen Verstellweg der Führungsleiste 346 festlegt.

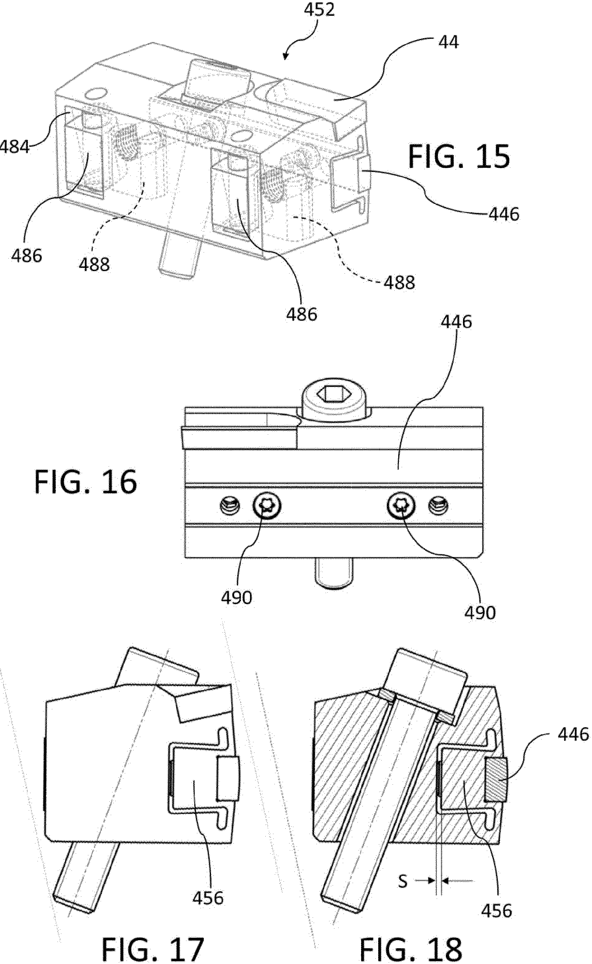

Zur Ein- bzw. Nachstellung der Führungsleiste 346 sind wieder zwei axial zueinander versetzte, radial von außen her betätigbare Differentialgewindeschrauben 372, 374 vorgesehen, von denen eine im Schnitt gemäß Figur 13 gezeigt ist. Die Differentialgewindeschraube 372, welche von der der Führungsleiste 346 abgewandten Seite über eine nicht näher bezeichnete Bohrung in den Kurzklemmhalter 352 einführbar ist, ist mit ihrem Gewindeabschnitt 372-1 kleineren Durchmessers in den Führungsleistenträger 356 geschraubt und steht mit ihrem Gewindeabschnitt 372-2 größeren Durchmessers in Gewindeeingriff mit einer Stützmutter 388, die bei montierter, d.h. eingeschraubter Position der Differentialgewindeschraube 372 (siehe Figur 13) von der Bodenseite des Kurzklemmhalters 352 eingelegt werden kann, so dass sie mit Passung unverrückbar und bündig mit der Außenfläche 362U im Kurzklemmhalter 352 sitzt. Die Stützmutter 388 ist dabei so ausgebildet, dass ihr Gewinde den Gewindeabschnitt 372-2 nur über einen Zentriwinkel von 180°, also bis zu einer Mittelebene EM der Differentialgewindeschraube 372 umfasst. Diese Einzelheit ist am besten der weiter unten noch zu beschreibenden Figur 15 entnehmbar.

Für den Durchgriff eines am Kopf der Differentialgewindeschraube 372 angreifenden Verstellwerkzeugs hat die Führungsleiste 346 einen Durchbruch 380. Wie bei den zuvor beschriebenen Ausführungsbeispielen ist die Führungsleiste durch Verdrehen der Differentialgewindeschrauben 372, 374 sowohl parallel zur Werkzeugachse A bzw. zur Außenwand 362R radial nach innen und außen als auch hinsichtlich ihrer Neigung zu diesen Bezugslinien und -flächen verstellbar, wobei sich diese Verstellung mit einer Genauigkeit im Mikrometer- bzw. Winkelminutenbereich bewirken lässt. Die Verstellung des Führungsleistenträgers 356 auf den werkzeugfesten Körper des Kurzklemmhalters 352 zu liegt dabei im Rahmen des Spalts der Weite S (Figur 14).

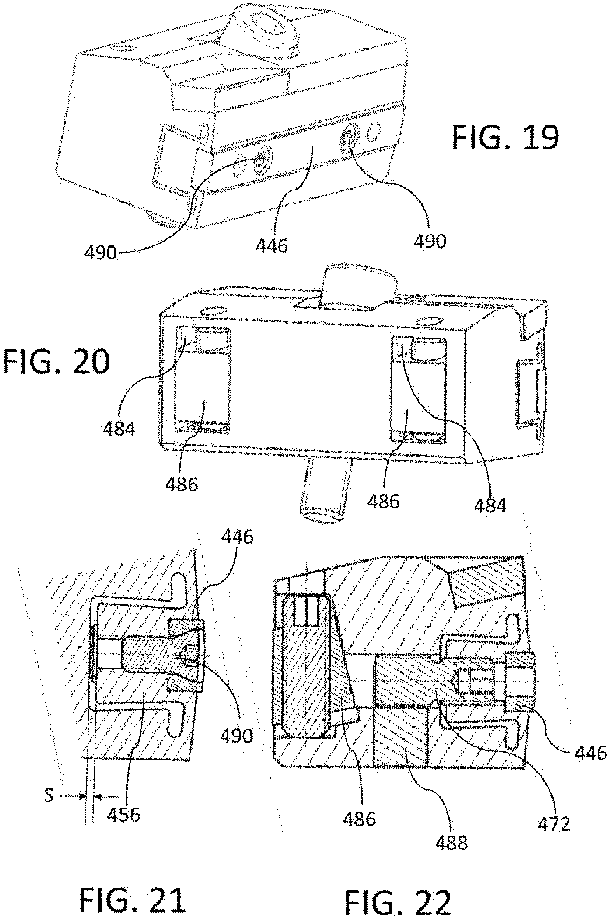

Unter Bezug auf die Figuren 15 bis 22 wird nachfolgend eine gegenüber dem Ausführungsbeispiel gemäß Figur 12 bis 14 leicht modifizierte Ausgestaltung eines mit einem Schneideinsatz 44 ausgestatteten Kurzklemmhalters 452 mit integrierter verstellbarer Führungsleiste 446 beschrieben. Die einzelnen Figuren zeigen: in Figur 15 eine perspektivische Ansicht des Kurzklemmhalters 452; in Figur 16 eine Seitenansicht bei einer Blickrichtung parallel zur Ebene des Schneideinsatzes 44; in Figur 17 eine Seitenansicht bei einer Blickrichtung parallel zur Werkzeugachse; in Figur 18 die Schnittansicht in einer Ebene durch die Achse der Spannschraube; in Figur 19 die perspektivische Ansicht des Kurzklemmhalters von der radialen Außenseite her betrachtet; in Figur 20 die perspektivische Ansicht des Kurzklemmhalters radial von innen betrachtet; in Figur 21 den etwas vergrößerten Teilschnitt im Bereich einer Befestigungsschraube 490 für die Führungsleiste 446 und in Figur 22 den Schnitt im Bereich einer Differentialgewindeschraube 472 für die Ein- bzw. Verstellung der Führungsleiste 446.

Übereinstimmungen mit der Ausgestaltung des Kurzklemmhalters nach Figur 12 bis 14 bestehen hinsichtlich der Gestaltung des Materialgelenks, der radialen Einstellbarkeit des Kurzklemmhalters 452 und der radialen Ein- und Nachstellbarkeit der Führungsleiste 446, so dass eine erneute Beschreibung entfallen kann. Die hierfür benötigten Bauelemente sind mit ähnlichen Bezugszeichen versehen, denen allerdings anstelle einer "3" eine "4" vorangestellt ist.

Im Unterschied zur Ausbildung des Kurzklemmhalters nach Figur 12 bis 14 ist bei dem Ausführungsbeispiel der Figuren 15 bis 22 eine Führungsleiste 446 vorhanden, die sich über die gesamte Länge des Kurzklemmhalters 452 erstreckt. Die Führungsleiste 446 ist außerdem mit dem Führungsleistenträger 456 lösbar mittels zweier Befestigungsschrauben 490 (siehe Figur 21) verschraubt. Aus der Figur 15 sind Einzelheiten der Komponenten erkennbar, die vorstehend bereits zur Erläuterung der radialen Verstellung des Kurzklemmhalters und der Einstellung der Führungsleiste erwähnt worden sind. Man erkennt im Einzelnen die in den Kurzklemmhalter 452 eingearbeiteten oder eingeformten Taschen 484 zur formschlüssigen Aufnahme der Abstützkörper 486 und die Ausgestaltung der Stützmutter 488, die mit dem Gewindeabschnitt 472-2 der Differentialgewindeschraube 472 lediglich über einen Zentriwinkel von 180° in Gewindeeingriff steht. Die Materialbrücken GM1 und GM2 sind exakt so ausgebildet wie beim Ausführungsbeispiel gemäß Figur 12 bis 14. Zur Herstellung derartiger Materialbrücken kann beispielsweise ein Erodier- oder ein Laser-Bearbeitungsverfahren Anwendung finden.

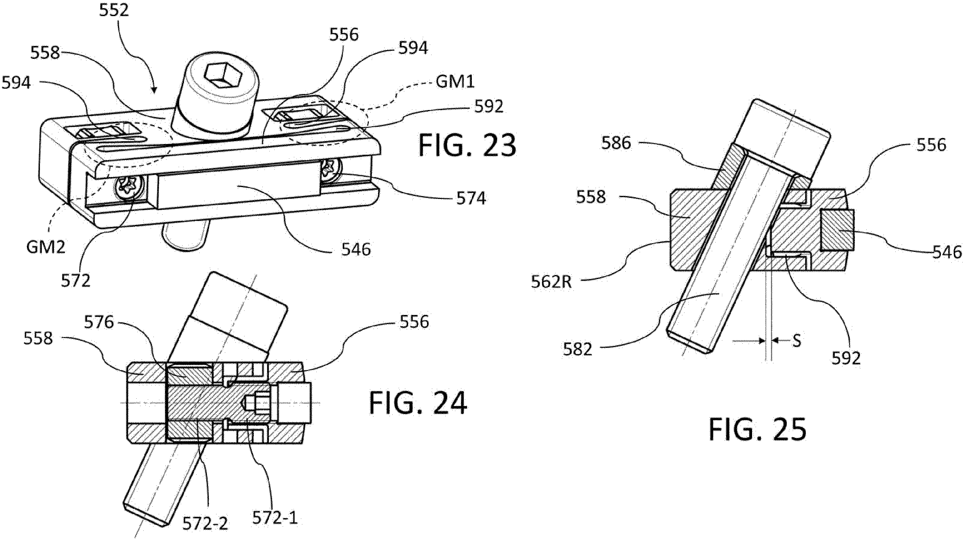

Mit Bezug auf die Figuren 23 bis 25 wird eine weitere Ausgestaltung einer eine einstellbare Führungsleiste 546 tragenden Kassette 552 näher beschrieben. Hinsichtlich der radialen Verstellmimik unterscheidet sich diese Ausführungsform nicht wesentlich von derjenigen der Figuren 6 bis 8 und der Figuren 9 bis 11, allerdings mit dem Unterschied, dass die Differentialgewindeschrauben 572, 574 radial von außen in die Kassette 552 eingeschraubt bzw. eingefädelt werden, so dass der im Durchmesser größere Gewindeabschnitt 572-1 wie bei dem Ausführungsbeispiel gemäß Figur 3 bis 5 mit dem Führungsleistenträger 556 in Gewindeeingriff steht, während der andere, mit unterschiedlicher Gewindesteigung ausgestattete und im Durchmesser kleinere Gewindeabschnitt 572-2 in eine Mutter 576 eingreift, die in einer Ausnehmung des Kassettenabschnitt 558 verschiebefest gefangen ist.

Ein wesentlicher Unterschied zu den vorstehend beschriebenen Varianten ist in der Gestaltung des Materialgelenks zu sehen, d.h. in der Gestaltung der in Figur 23 mit gestrichelten Linien bezeichneten Materialbrücken GM1, GM2, über die der Führungsleistenträger 556 an den Kassettenabschnitt 558 angebunden ist. Diese Materialbrücken entstehen dadurch, dass in den Kassettenkörper eine sich nahezu über die gesamte Länge erstreckende mehrdimensionale Ausnehmung 592 (siehe Figur 23 und 25) eingeformt oder eingearbeitet ist, wobei zusätzlich seitliche Einschnitte 594 vorgesehen sind, wodurch zwischen Führungsleistenträger 556 und Kassettenabschnitt 558 Materialstege 596 verbleiben, die mittels der Differentialgewindeschrauben 572, 574 elastisch verformbar sind, um die Führungsleiste 546 radial und/oder bezüglich ihrer Neigung zur Werkzeugachse bzw. zur Außenfläche 562R einzustellen. Auch bei dieser Variante stützt sich der Führungsleistenträger 556 bedingt durch die Verspannung des Kassettenabschnitts 558 mit dem Werkzeugträgerabschnitt flächig ab, so dass das Materialgelenk GM1, GM2 nur in einer Ebene durch die Differentialgewindeschrauben 572, 574 blockiert werden muss.

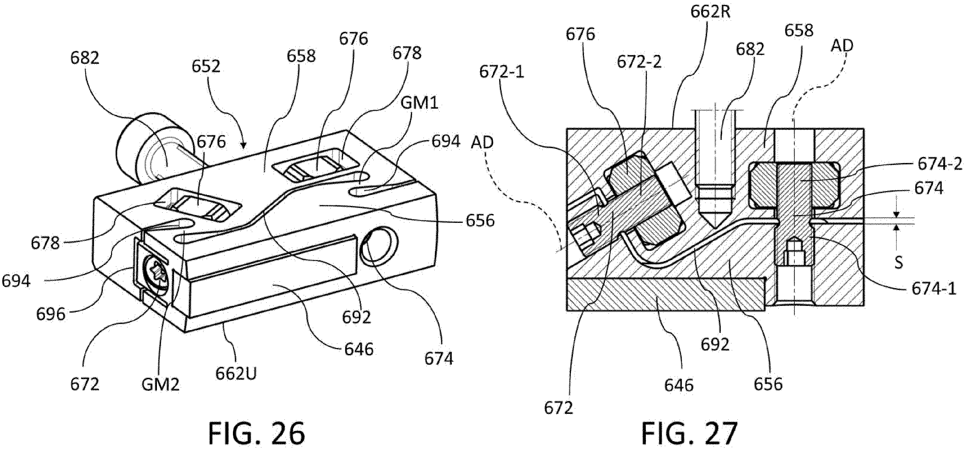

Schließlich wird unter Bezug auf die Figuren 26 und 27 eine hinsichtlich der Gestaltung des Materialgelenks GM und hinsichtlich ihrer Verankerung am Werkzeugträgerabschnitt modifizierte Ausführungsform einer quaderförmig ausgebildeten Kassette 652 mit integrierter einstellbarer Führungsleiste 646 beschrieben. Ansonsten entspricht die Kassette 652 einschließlich der Betätigung und Zugänglichkeit der Differentialgewindeschrauben 672, 674 der in den Figuren 3 bis 5 gezeigten Ausführungsform, so dass eine erneute Beschreibung der dazu erforderlichen Komponenten und deren Funktionsweise entfallen kann. Vergleichbare Bauelemente sind wieder mit Bezugszeichen versehen, die denjenigen der Figuren 3 bis 5 ähnlich sind, denen aber eine "6" vorangestellt ist.

Anstelle einer den Kassettenabschnitt 858 schräg durchringenden Spannschraube, wie sie bei den Ausführungsformen der Figuren 9 bis 25 verwendet wird, wird bei dem Ausführungsbeispiel gemäß Figur 26 und 27 eine Zugschraube 682 verwendet, um den Kassettenabschnitt 658 mit dessen Außenfläche 662R gegen eine Stützfläche in der Ausnehmung 54 des Werkzeugträgerabschnitt 36 zu drücken und damit werkzeugfest zu positionieren.

Die identisch ausgebildeten Differentialgewindeschrauben 672, 674 sind - wie bei der Ausführungsform gemäß Figur 3 bis 5 von der Stirnseite (672) und der radialen Außenseite zugänglich und verstellbar, so dass die Führungsleiste 646 ohne Durchbruch für eine der Differentialgewindeschrauben 672, 674 ausgebildet werden kann. Wie der Schnittdarstellung nach Figur 27, die den Horizontalschnitt auf Höhe der Achsen AD der Differentialgewindeschrauben 672, 674 zeigt, entnommen werden kann, stehen die Gewindeabschnitte 672-1, 674-1 größeren Durchmessers mit dem Führungsleistenträger 656 in Eingriff, während die Gewindeabschnitte 672-2, 674-2 größeren Durchmessers jeweils in eine Mutter 676 geschraubt sind, die in einer Tasche 678 des fest am Werkzeugträgerabschnitts fixierbaren Kassettenabschnitts 658 axial verschiebefest gefangen ist.

Der Führungsleistenträger 656 ist an den Kassettenabschnitt 658 über ein zur Schnittebene der Figur 27 symmetrisch ausgebildetes Materialgelenk angebunden, welches - wie den Darstellungen der Figuren 26 und 27 entnehmbar ist, verhältnismäßig komplex ausgebildet ist, so für die Ausbildung vorzugsweise ein 3-D-Druckverfahren, wie z.B. in einem Selektives Laser Sinter-(SLS)-Verfahren verwendet wird. Entscheidend ist, dass das Materialgelenk durch geometrisch vorbestimmte Material-Fehlbereiche, die mit den Bezugszeichen 692, 694 und 696 bezeichnet sind, in der Weise ausgebildet ist, dass zwischen dem Kassettenabschnitt 658 und dem Führungsleistenträger 656 elastisch nachgiebige Materialbrücken GM1, GM2 und ein ausreichend großer Spalt der Weite S verbleibt, wodurch es dem Führungsleistenträger 656 ermöglicht wird, sich zumindest im Rahmen des Spalts S in einer Ebene parallel zur Bodenfläche 662U, über die sich - wie in Figur 1 und 2 gezeigt - die Kassette 652 in einer schlitzartigen Ausnehmung 54 eines Werkzeugträgerabschnitts 36 abstützt, relativ zum Kassettenabschnitt 658 radial nach innen zu bewegen, wenn die Differentialgewindeschrauben 672, 674 verstellt werden. Auf diese Weise kann die radiale Position der Führungsleiste 646 sowie deren Winkellage zum Kassettenabschnitt 658 und damit zur Werkzeugachse A eingestellt werden.

Um dabei eine Biegeverformung des Führungsleistenträgers 656 weitestgehend auszuschließen, wird das von den verbleibenden Materialbrücken GM1, GM2 gebildete Materialgelenk im Vergleich zum Führungsleistenträger 656 ausreichend weich gestaltet. Eine Überbeanspruchung wird dadurch vermieden, dass die auf die Führungsleiste 646 einwirkenden Radialkräfte von den Differentialgewindeschrauben 672, 674 aufgenommen werden, und die in Umfangsrichtung von der Führungsleiste eingeleiteten Kräfte durch die flächige Abstützung des Führungsleistenträgers 656 über dessen Bodenfläche 662U abgefangen werden. Somit können auch die Differentialgewindeschrauben 672, 674 verhältnismäßig kleinvolumig ausgebildet werden.

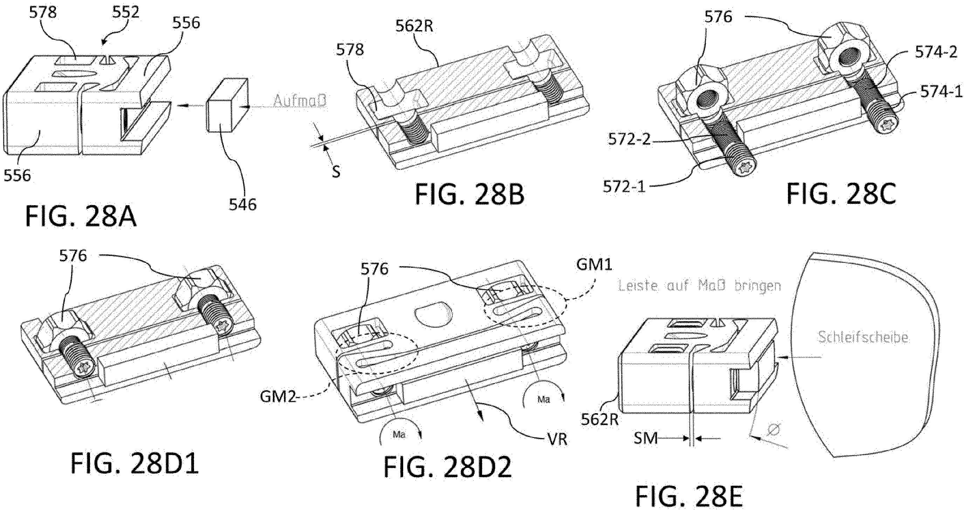

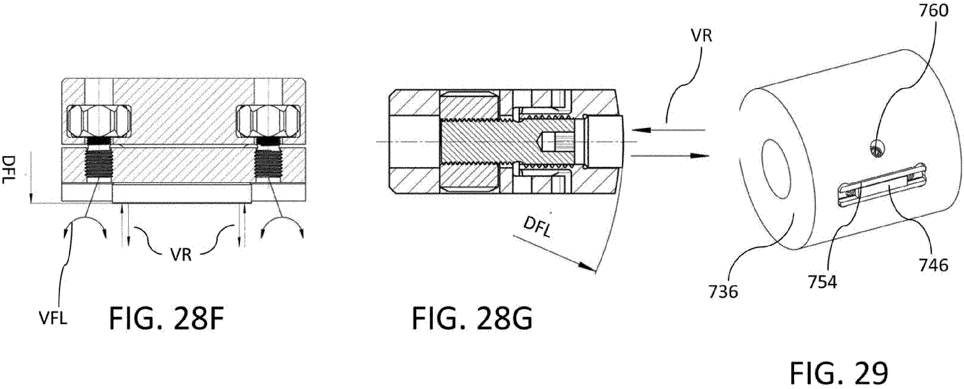

Im Folgenden wird anhand der Figuren 28A bis 28G beschrieben, wie vorzugsweise die bei den vorstehend beschriebenen Kassetten verwendeten Führungsleisten am Werkzeug, an den Kassetten und am Kurzklemmhalter montiert werden. Beispielhaft wird dabei eine Kassettenkonstruktion gemäß den Figuren 23 bis 25 herangezogen, so dass auch die dort verwendeten Bezugszeichen übernommen werden.

Die fertig bearbeitete und mit den Gewindebohrungen, Taschen und Materialgelenken bzw. Materialbrücken GM1, GM2 ausgestattete Kassette 552, welche beispielsweise unter Verwendung eines 3-D-Druck-Verfahrens hergestellt worden ist, wird zunächst mit einer Führungsleiste 546 bestückt (Fig. 28A), die noch ein radiales Aufmaß aufweist. Die Führungsleiste 546 wird dabei beispielsweise in den Führungsleistenträger 556 eingelötet.

In der Schnittansicht gemäß Fig. 28B ist die montierte Führungsleiste gezeigt, die seitlich neben den für die Aufnahme der Differentialgewindeschrauben 572, 574 dienenden Gewindebohrungen im Führungsleistenträger 556 liegen.

In die Ausnehmungen 578 des Kassettenabschnitts 558 werden nun - wie in Figur 28C dargestellt, die Muttern 576 eingelegt, woraufhin die Differentialgewindeschrauben 572, 574 mit ihren Gewindeabschnitten 572-2, 574-2 kleineren Durchmessers mit Spiel durch die Gewindebohrung im Führungsleistenträger 556 eingeschoben werden können, bis ein Gewindeabschnitt 572-1, 572-2, 574-1, 574-2 mit dem Gegengewinde im Führungsleistenträger 556 oder im Kassettenabschnitt 658 in Eingriff gelangt.

Nun können die Differentialgewindeschrauben zunächst kraftfrei in eine in Figur 28D1 gezeigte Position eingeschraubt werden. Da die Gewindeabschnitte 572-1 und 572-2 bzw. 574-1 und 547-2 eine unterschiedliche Gewindesteigung haben, muss bei der Einschraubbewegung zunächst die Mutter 576 mitverdreht werden, um den Steigungsunterschied auszugleichen. Die Differentialgewindeschrauben können somit in die in Figur 28D1 gezeigte Lage gebracht werden, ohne die Materialbrücken GM1, GM2 zu beanspruchen. Der Führungsleistenträger 556 ist kraftfrei, aber über die Differentialgewindeschrauben 572, 574 versteift am Führungsleistenträger 558 angebunden.

In dieser Position der Differentialgewindeschrauben 572, 574 werden die Muttern 576 drehfest gehalten. Wenn jetzt die Differentialgewindeschrauben 572, 574 weiter gedreht werden, wird der Führungsleistenträger 556 - wie in Figur 28D2 mit dem Pfeil VR angedeutet - vom Kassettenabschnitt 558 unter elastischer Verformung der Materialbrücken GM1, GM2 weg bewegt, so dass sich die Spaltbreite S (siehe Figur 28B) vergrößert. Es hat sich gezeigt, dass es zur Parallelverstellung des Führungsleistenträgers 556 von Vorteil ist, die Differentialgewindeschrauben 572, 574 mit einem Drehmomentschlüssel bis zu einem Grenz-Anzugsdrehmoment Ma anzuziehen. Die Größe des Drehmoments Ma hängt von der Gestaltung der Materialbrücken GM1, GM2 und der Steifigkeit des Führungsleistenträgers 556 ab; es liegt bei den in den Figuren gezeigten Kassetten in der Größenordnung von 1 Nm. Die Spaltbreite S zwischen Führungsleistenträger 556 und Kassettenabschnitt 858 hat sich dabei auf einen Wert SM vergrößert, wie in Figur 28E gezeigt.

In dieser Position, also in einer Ausrichtung parallel zu der der Führungsleiste 556 abgewandten Außenfläche 562R bzw. parallel zur Werkzeugachse A wird die Führungsleiste 546 - wie in Figur 28E dargestellt - auf Maß gebracht, d.h. mittels einer Schleifscheibe im am Werkzeugträgerabschnitt fest verankerten Zustand der Kassette 578 auf Maß rundgeschliffen, so dass sie mit dem radial äußersten Flugkreis der Werkzeugschneide des Werkzeugs im Wesentlichen fluchtet.

Aus dieser Position heraus kann dann die Führungsleiste 556 - wie in Figur 28F angedeutet zur Feineinstellung bzw. zur Nachstellung an beiden Enden und voneinander entkoppelt um das Maß SM radial nach innen und außen verstellt werden, indem die Differentialgewindeschrauben 572, 574 - wie durch die Doppelpfeile VFL angedeutet - in eine der beiden Richtungen gedreht werden, wodurch der Durchmesser DFL, auf dem Kontaktfläche der Führungsleiste 546 liegt, bzw. der Neigungswinkel der Führungsleiste zur Werkzeugachse im Genauigkeitsbereich von Mikrometern bzw. Winkelminuten ein- bzw. nachstellen lässt.

Figur 29 zeigt eine modifizierte Art und Weise der Führungsleistenverstellung. Die Führungsleiste 746 sitzt auf einer Kassette 752, die hinsichtlich des Materialgelenks und der Verstellmimik mittels der Differentialgewindeschrauben ähnlich der Kassette 552 der Figuren 23 bis 25 ausgebildet sein kann, die aber eine abgewandelte Verankerung im stilisiert dargestellten Werkzeugträgerabschnitt 736 hat. Die Kassette ist formschlüssig in einer Tasche 754 aufgenommen und wird mittels einer Druckschraube 760 - ähnlich wie bei der Ausführungsform gemäß Figur 3 bis 5 - in der Tasche 754 fixiert.

Selbstverständlich sind weitere Abwandlungen der vorstehend beschriebenen Ausführungsformen möglich, ohne den Grundgedanken der Erfindung zu verlassen:
Vorstehend wurden durchgehend Ausführungsbeispiele beschrieben, bei denen der Führungsleistenträger über das Materialgelenk an eine Kassette angebunden ist, die ihrerseits an einem Werkzeugträgerabschnitt befestigt wird. Es ist jedoch grundsätzlich auch möglich, die Ausnehmungsmuster zur Bildung des Materialgelenks im Werkzeugträgerabschnitt selbst auszubilden, was allerdings in der Regel eine besondere Herstellungstechnik voraussetzt. Durch eine geeignete additive Fertigung, beispielsweise durch ein SLS (selective laser sintering)-Verfahren, kann allerdings inzwischen auch wirtschaftlich jede beliebige Gestaltung des Materialgelenks einstückig mit dem Werkzeugträgerabschnitt ausgebildet werden.

Es ist ferner möglich, das Materialgelenk auch so auszubilden, dass es dem Führungsleistenträger weitere Bewegungsfreiheitsgrade, beispielsweise eine Schwenkbewegung um eine zur Führungsleiste parallele Achse, gibt, die durch die Stelleinrichtung blockiert werden.

Die radiale Einstellung der Kassette kann auch bei einer Kassette ohne Schneideinsatz vorgesehen sein.

Die Ausgestaltung der Ver- und Nachstellung der Führungsleiste eignet sich auch in besonderem Maße für Werkzeuge, mit denen tiefe Bohrungen hergestellt werden sollen.

Die Erfindung schafft somit ein spanabhebendes Werkzeug zur Herstellung bzw. Bearbeitung von Bohrungen mit hoher Positions- und/oder Oberflächengüte, mit einer Werkzeugachse und einem Werkzeugträgerabschnitt, der zumindest eine Werkzeugschneide und zumindest eine den Werkzeugträgerabschnitt radial an einer Bohrungswand abstützende Führungsleiste trägt. Die Führungsleiste ist mittels einer an einem Führungsleistenträger angreifenden Stelleinrichtung hinsichtlich ihrer radialen Position und hinsichtlich ihrer Neigung bezüglich der Werkzeugachse einstellbar. Um mit geringem Aufwand ein hochpräzise arbeitendes Werkzeug mit zumindest einer Führungsleiste zusammenzustellen, die schnell und genau in eine optimale Position gebracht und bei Verschleiß exakt nachjustiert werden kann, ist der Führungsleistenträger über ein Materialgelenk an einen werkzeugfesten Abschnitt, also entweder an den Werkzeugträgerabschnitt oder ein damit fest verbindbare Komponente, wie z.B. eine Kassette angebunden, und das Materialgelenk ist mittels der Stelleinrichtung blockierbar.

## Patentansprüche

1. Spanabhebendes Werkzeug (30) zur Herstellung bzw. Bearbeitung von Bohrungen mit hoher Positions- und/oder Oberflächengüte, mit einer Werkzeugachse (A) und einem Werkzeugträgerabschnitt (36; 736), der zumindest eine Werkzeugschneide (44) und zumindest eine den Werkzeugträgerabschnitt (36; 736) radial an einer Bohrungswand abstützende Führungsleiste (46) trägt, die mittels einer an einem Führungsleistenträger (56) angreifenden Stelleinrichtung (72, 74) hinsichtlich ihrer radialen Position und hinsichtlich ihrer Neigung bezüglich der Werkzeugachse (A) einstellbar ist, **dadurch gekennzeichnet, dass** der Führungsleistenträger (56) über ein Materialgelenk (GM; GM1, GM2) an einen werkzeugfesten Abschnitt (58; 36; 736) angebunden ist, und das Materialgelenk (GM; GM1, GM2) mittels der Stelleinrichtung (72, 74, 76) blockierbar ist.

2. Werkzeug nach Anspruch 1, **dadurch gekennzeichnet, dass** die Stelleinrichtung zumindest ein in seiner Länge einstellbares, stabartig ausgebildetes Stellglied (72, 74) aufweist.

3. Werkzeug nach Anspruch 1 oder 2, **dadurch gekennzeichnet, dass** die Stelleinrichtung (72, 74, 76) zwischen dem Führungsleistenträger (56) und einer bezüglich des Werkzeugträgerabschnitts (36; 736) räumlich fixierten bzw. fixierbaren Komponente (58) des Werkzeugs (30) geschaltet ist.

4. Werkzeug nach einem der Ansprüche 1 bis 3, **dadurch gekennzeichnet, dass** das Materialgelenk (GM; GM1, GM2) derart gestaltet ist, dass es eine im Wesentlichen radiale Verschiebebewegung (R) und eine Verschwenkbewegung des Führungsleistenträgers (56) gegenüber dem werkzeugfesten Abschnitt (58) um eine Achse (AG) erlaubt, welche auf einer die Führungsleiste (46) und die Werkzeugachse (A) enthaltenden Radialebene (Fig. 4) im Wesentlichen senkrecht steht.

5. Werkzeug nach Anspruch 4, **dadurch gekennzeichnet, dass** zur Blockierung des Materialgelenks (GM; GM1, GM2) zumindest zwei Stellglieder (72, 74) vorgesehen sind, die auf verschiedenen Seiten der Gelenkachse (AG) liegen.

6. Werkzeug nach einem der Ansprüche 2 bis 5, **dadurch gekennzeichnet, dass** das zumindest eine Stellglied (72, 74) eine vorzugsweise radial oder stirnseitig zugängliche Stellschraube (72, 74) aufweist, die sich einerseits zumindest mittelbar am werkzeugfesten Abschnitt (58) abstützt und andererseits mit dem Führungsleistenträger (56) in Gewindeeingriff steht.

7. Werkzeug nach Anspruch 6, **dadurch gekennzeichnet, dass** die Stellschraube von einer Differentialgewindeschraube (72, 74) gebildet ist, die zwei Gewindeabschnitte (72-1, 72-2, 74-1, 74-2) unterschiedlicher Steigung oder unterschiedlichen Gewindesinns hat, von denen ein erster Gewindeabschnitt (72-1) in den Führungsleistenträger (56) und ein zweiter Gewindeabschnitt (72-2) in eine vorzugsweise von außen einsetzbare Mutter (76) eingreift, die in einer schlitzartigen Ausnehmung (78) verschiebefest gefangen ist.

8. Werkzeug nach einem der Ansprüche 3 bis 7, **dadurch gekennzeichnet, dass** der den Führungsleistenträger (56) über das Materialgelenk (GM) tragende Komponente (58) von einem Abschnitt einer vorzugsweise quaderförmig ausgebildeten Kassette (52) gebildet ist.

9. Werkzeug nach Anspruch 7, **dadurch gekennzeichnet, dass** die Kassette (52; 752) in einer Tasche (54; 754), wie z.B. in einer schlitzartigen Ausnehmung (54) des Werkzeugträgerabschnitts (36) aufgenommen und mittels einer die Kassette (52) entweder durchdringenden oder drückenden Spannschraube (60) in dieser fixierbar ist, indem sie unter flächiger Abstützung einer Kassettenwand (62U) auf einer im Wesentlichen radialen Stützfläche gegen eine dazu im Winkel verlaufende Stützflächenanordnung drückbar ist.

10. Werkzeug (1) nach Anspruch 6 oder 7, **dadurch gekennzeichnet, dass** die Kassette (352; 452) radial verstellbar ist.

11. Werkzeug (1) nach einem der vorhergehenden Ansprüche 8 bis 10, **dadurch gekennzeichnet, dass** die Kassette (352; 452) zumindest ein Schneidwerkzeug trägt, das vorzugsweise von einer Schneidplatte (44) gebildet ist.

12. Werkzeug (1) nach einem der Ansprüche 1 bis 11, **dadurch gekennzeichnet, dass** das Materialgelenk (GM; GM1, GM2) durch eine materialabtragende Bearbeitung, wie z.B. durch ein Erodierverfahren, hergestellt ist.

13. Werkzeug nach einem der Ansprüche 1 bis 11, **dadurch gekennzeichnet, dass** das Materialgelenk (GM; GM1, GM2) im 3-D-Druckverfahren, wie z.B. in einem SLS-Verfahren, hergestellt ist.

14. Kassette für ein spanabhebendes Werkzeug (30) nach einem der Ansprüche 1 bis 13, in der Ausgestaltung als im Wesentlichen prismen- bzw. quaderförmiger Körper (52), der zur Fixierung am Werkzeug vorzugsweise mit drei seiner Außenflächen (62U, 62R, 62A) mittels einer Spannschraube (60; 282; 382; 482; 582; 682) gegen entsprechende Anschläge des Werkzeugs drückbar ist und auf einer radial außenliegenden Seitenfläche eine Führungsleiste (46) trägt, **dadurch gekennzeichnet, dass** ein die Führungsleiste (46) tragender Abschnitt (56) der Kassette über ein Materialgelenk (GM; GM1, GM2) an einen kassettenfesten Abschnitt (58) angebunden ist, und das Materialgelenk (GM; GM1, GM2) mittels einer Stelleinrichtung (72, 74, 76) blockierbar ist.

15. Kassette nach Anspruch 14, **dadurch gekennzeichnet, dass** die Stelleinrichtung zumindest ein in seiner Länge einstellbares, stabartig ausgebildetes Stellglied (72, 74) aufweist.

16. Kassette nach Anspruch 14 oder 15, **dadurch gekennzeichnet, dass** das Materialgelenk (GM; GM1, GM2) derart gestaltet ist, dass es eine parallel zu einer Auflagefläche (62U) der Kassette (52) liegende Verschiebe- und Verschwenkbewegung des die Führungsleiste (46) tragenden Abschnitts (56) gegenüber dem kassettenfesten Abschnitt (58) erlaubt.

17. Kassette nach Anspruche 16, **dadurch gekennzeichnet, dass** zur Blockierung des Materialgelenks (GM; GM1, GM2) zumindest zwei Stellglieder (72, 74) vorgesehen sind, die auf verschiedenen Seiten einer Gelenkachse (AG) liegen, die senkrecht auf der Auflagefläche (62U) steht.

18. Kassette nach einem der Ansprüche 2 bis 5, **dadurch gekennzeichnet, dass** das zumindest eine Stellglied (72, 74) eine von einer Außenfläche der Kassette (52) zugängliche Stellschraube (72, 74) aufweist, die sich einerseits zumindest mittelbar am kassettenfesten Abschnitt (58) abstützt und andererseits mit dem die Führungsleiste (46) tragenden Abschnitt (56) in Gewindeeingriff steht.

19. Kassette nach Anspruch 18, **dadurch gekennzeichnet, dass** die Stellschraube von einer Differentialgewindeschraube (72, 74) gebildet ist, die zwei Gewindeabschnitte (72-1, 72-2, 74-1, 74-2) unterschiedlicher Steigung oder unterschiedlichen Gewindesinns hat, von denen ein erster Gewindeabschnitt (72-1) in den die Führungsleiste (46) tragenden Abschnitt (56) und ein zweiter Gewindeabschnitt (72-2) in eine vorzugsweise von außen einsetzbare Mutter (78) eingreift, die in einer schlitzartigen Ausnehmung (78) verschiebefest gefangen ist.

20. Kassette nach einem der Ansprüche 14 bis 19, **dadurch gekennzeichnet, dass** die Kassette (352; 452) zumindest ein Schneidwerkzeug trägt, das vorzugsweise von einer Schneidplatte (44) gebildet ist.

21. Kassette nach einem der Ansprüche 14 bis 20, **dadurch gekennzeichnet, dass** die Kassette und/oder das Materialgelenk (GM; GM1, GM2) durch eine materialabtragende Bearbeitung, wie z.B. durch ein Erodierverfahren, hergestellt ist.

22. Kassette nach einem der Ansprüche 14 bis 21, **dadurch gekennzeichnet, dass** die Kassette und/oder das Materialgelenk (GM; GM1, GM2) im 3-D-Druckverfahren, wie z.B. in einem SLS-Verfahren, hergestellt ist.

23. Verfahren zur Einstellung der Position und Ausrichtung einer Führungsleiste (546) eines spanabhebenden Werkzeugs nach einem der Ansprüche 1 bis 13, **dadurch gekennzeichnet, dass** der über das Materialgelenk (GM1, GM2) an die bezüglich des Werkzeugträgerabschnitts (36) räumlich fixierte bzw. fixierbare Komponente (558) des Werkzeugs angebundene Führungsleistenträger (556) mittels des zumindest einen Stellglieds (572, 574) in eine Position (Figur 28D2) gebracht wird, in der unter geringer elastischer Verformung des Materialgelenks (GM1, GM2) die radial äußere Stützfläche () der Führungsleiste (546) parallel zur Werkzeugachse ausgerichtet ist und mit dem radial äußersten Flugkreis der Werkzeugschneide im Wesentlichen fluchtet, und dass die Führungsleiste (546) in dieser Position auf Maß rundgeschliffen wird.
